# EUROPEAN PATENT APPLICATION

(11) **EP 4 554 163 A1**
(43) Date of publication of application: **14.05.2025**
(21) Application number: 23856303.5
(22) Date of filing: 30.06.2023
(51) Int. Cl.: H04L 41/0659

(54) **COMMUNICATION METHOD, APPARATUS AND SYSTEM, AND STORAGE MEDIUM**

(30) Priority: 23.08.2022 CN 202211013523
(71) Applicant: Huawei Technologies Co., Ltd., Shenzhen, Guangdong 518129 (CN)
(72) Inventor: CHEN, Fen, Shenzhen, Guangdong 518129 (CN)
(74) Representative: MERH-IP Matias Erny Reichl Hoffmann Patentanwälte PartG mbB
(86) International application number: PCT/CN2023/104920
(87) International publication number: WO 2024/041213

(57) **Abstract**

This application discloses a communication method, apparatus, and system, and a storage medium, and belongs to the communication field. The method includes: A first node performs a communication connection to a second node in a second network when a fault occurs in a first network, where the first network is a chain network, the first network is divided into a first part and a second part because of the fault, the first part includes a head node in the first network, communication between the first part and the second part is interrupted, and the second part includes the first node; and the first node sends first data to the second node, where the first data is data belonging to the second part. This application can recover communication of a node between a position of a fault and a tail node in a first network when the fault occurs in the first network.

## Description

This application claims priority to Chinese Patent Application No. 202211013523.0, filed with the China National Intellectual Property Administration on August 23, 2022 and entitled "COMMUNICATION METHOD, APPARATUS, AND SYSTEM, AND STORAGE MEDIUM", which is incorporated herein by reference in its entirety.

### TECHNICAL FIELD

This application relates to the communication field, and in particular, to a communication method, apparatus, and system, and a storage medium.

### BACKGROUND

A chain network is used in a monitoring scenario along a power transmission line, a monitoring scenario along an oil and gas pipeline, or a monitoring scenario along a rive. For example, a power transmission line is used as an example. The power transmission line is built on a plurality of power towers, and nodes are deployed on the plurality of power towers. For a node deployed on any power tower, the node includes a routing device and a sensor device. The node establishes a wireless connection to two adjacent nodes of the node through the routing device. In this way, the nodes deployed on the power towers form a chain network, and a head node in the chain network communicates with a network management device.

The sensor device of the node is configured to collect data of an ambient environment of the node. The node sends the data to the head node, the head node forwards the data to the network management device, and the network management device receives the data. The network management device may receive data of an ambient environment of each node in the chain network, to monitor an ambient environment of the power transmission line.

Currently, when a fault occurs in a chain network, a node between an occurrence position of the fault and a head node can further send data to the head node. However, communication between a node between the occurrence position of the fault and a tail node in the chain network and the head node is interrupted, causing a data sending failure of the node. Therefore, how to recover communication of the node when a fault occurs in the chain network is an urgent problem to be resolved.

### SUMMARY

This application provides a communication method, apparatus, and system, and a storage medium, to recover communication of a node between a position of a fault and a tail node in a first network when the fault occurs in the first network. The technical solutions are as follows.

According to a first aspect, this application provides a communication method. In the method, a first node performs a communication connection to a second node in a second network when a fault occurs in a first network. The first network is a chain network, the first network is divided into a first part and a second part because of the fault, the first part includes a head node in the first network, communication between the first part and the second part is interrupted, and the second part includes the first node. The first node sends first data to the second node. The first data is data belonging to the second part.

The first network is divided into the first part and the second part because of the fault, the communication between the first part and the second part is interrupted, and the first node in the second part performs a communication connection to the second node in the second network. In this way, the first node can continue to send the data belonging to the second part through the second network, to recover the communication of the node in the second part.

In a possible implementation, a position relationship between the first node and the second node meets a specified condition. In this way, it is ensured that the first node can successfully perform a communication connection to the second node.

In another possible implementation, the specified condition includes one or more of the following: a distance between the first node and the second node is less than a distance threshold, or an altitude difference between the first node and the second node is less than a difference threshold. In this way, it is ensured that the first node can successfully perform a communication connection to the second node.

In another possible implementation, the first node obtains network information of a wireless local area network of the second node. The first node performs a communication connection to the second node based on the network information. In this way, the first node can establish a wireless connection to the second node through the network information of the wireless local area network, to implement a communication connection between the first node and the second node.

In another possible implementation, the first data is data collected by the first node for an environment in which the first node is located.

In another possible implementation, the first node receives the first data. The first data is data collected by a node in the second part other than the first node for an environment in which the node is located.

In another possible implementation, the second part further includes a third node, and the fault is a communication fault between the third node and an upstream neighboring node of the third node. The first node receives a fault identifier. The fault identifier is sent by the third node when detecting that the fault occurs in the first network. In this way, the first node can successfully determine, based on the fault identifier, that a fault occurs in the first network, and therefore can quickly perform a communication connection to the second node when the fault occurs in the first network, to quickly recover communication.

In another possible implementation, the fault is a communication fault between the first node and an upstream neighboring node of the first node.

In another possible implementation, the first node receives recovery information sent by the second node. The recovery information indicates that the communication between the first part and the second part is recovered. The first node sends second data to the head node based on the recovery information. The second data is data belonging to the second part, and the first data and the second data are data obtained by the first node at different moments. In this way, when the first network is recovered, the node in the second part resumes sending data to a network management device through the head node in the first network.

In another possible implementation, the first node is a tail node in the first network. In this way, when a fault occurs in the first network, each intermediate node located between a position of the fault and the tail node changes a data sending direction, and sends data to the tail node, to simplify implementation complexity of the solution.

In another possible implementation, the second network is a chain network, and is easy to be deployed in a scenario such as a scenario along a power transmission line, a scenario along an oil and gas pipeline, or a scenario along a river.

In another possible implementation, the second node is a tail node in the second network, the second network is a chain network, and the tail node in the second network may be closest to the first node in the first network. In this way, it is ensured that the first node can successfully perform a communication connection to the second node.

According to a second aspect, this application provides a communication method. In the method, a second node performs a communication connection to a first node in a first network. The second node is a node in a second network, a fault occurs in the first network, the first network is divided into a first part and a second part because of the fault, the first part includes a head node in the first network, communication between the first part and the second part is interrupted, and the second part includes the first node. The second node receives first data sent by the first node. The first data is data belonging to the second part. The second node sends the first data.

The first network is divided into the first part and the second part because of the fault that occurs in the first network, the communication between the first part and the second part is interrupted, and the second node in the second network performs a communication connection to the first node in the second part. The second node can receive the first data sent by the first node. The first data is data belonging to the second part. In this way, the first node can continue to send the data belonging to the second part through the second network, to recover the communication of the node in the second part.

In a possible implementation, a position relationship between the first node and the second node meets a specified condition. In this way, it is ensured that the first node can successfully perform a communication connection to the second node.

In another possible implementation, the specified condition includes one or more of the following: a distance between the first node and the second node is less than a distance threshold, or an altitude difference between the first node and the second node is less than a difference threshold. In this way, it is ensured that the first node can successfully perform a communication connection to the second node.

In another possible implementation, the second node receives recovery information. The recovery information indicates that the communication between the first part and the second part is recovered. The second node sends the recovery information to the first node. The recovery information further indicates that the first node sends second data to the head node, the second data is data belonging to the second part, and the first data and the second data are data obtained by the first node at different moments. In this way, when the first network is recovered, the node in the second part resumes sending data to a network management device through the head node in the first network.

In another possible implementation, the first node is a tail node in the first network. In this way, when a fault occurs in the first network, each intermediate node located between a position of the fault and the tail node changes a data sending direction, and sends data to the tail node, to simplify implementation complexity of the solution.

In another possible implementation, the second network is a chain network, and is easy to be deployed in a scenario such as a scenario along a power transmission line, a scenario along an oil and gas pipeline, or a scenario along a river.

In another possible implementation, the second node is a tail node in the second network, the second network is a chain network, and the tail node in the second network may be closest to the first node in the first network. In this way, it is ensured that the first node can successfully perform a communication connection to the second node.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a fifth aspect, this application provides a first node. The first node includes a memory, a processor, and a computer program stored in the memory; and when the processor executes the computer program, the first node is enabled to complete the method according to any one of the first aspect or the possible implementations of the first aspect.

According to a sixth aspect, this application provides a second node. The second node includes a memory, a processor, and a computer program stored in the memory; and when the processor executes the computer program, the second node is enabled to complete the method according to any one of the second aspect or the possible implementations of the second aspect.

According to a seventh aspect, this application provides a computer program product. The computer program product includes a computer program stored in a computer-readable storage medium, and the computer program is loaded by a processor to implement the method according to any one of the first aspect, the second aspect, the possible implementations of the first aspect, or the possible implementations of the second aspect.

According to an eighth aspect, this application provides a computer-readable storage medium, configured to store a computer program or instructions, where the computer program or the instructions is loaded by a processor to implement the method according to any one of the first aspect, the second aspect, the possible implementations of the first aspect, or the possible implementations of the second aspect.

According to a ninth aspect, this application provides a chip, including a memory and a processor. The memory is configured to store computer instructions, and the processor is configured to invoke the computer instructions from the memory and run the computer instructions, to implement the method according to any one of the first aspect, the second aspect, the possible implementations of the first aspect, or the possible implementations of the second aspect.

According to a tenth aspect, this application provides a communication system, including the communication apparatus according to the third aspect and the communication apparatus according to the fourth aspect, or including the first node according to the fifth aspect and the second node according to the sixth aspect.

### BRIEF DESCRIPTION OF DRAWINGS

FIG. 1 is a diagram of a structure of a chain network according to an embodiment of this application;
FIG. 2 is a diagram of a structure of a node according to an embodiment of this application;
FIG. 3 is a diagram of a structure of another node according to an embodiment of this application;
FIG. 4 is a diagram of a structure of another chain network according to an embodiment of this application;
FIG. 5 is a diagram of a structure of a network architecture according to an embodiment of this application;
FIG. 6 is a diagram of a structure of another network architecture according to an embodiment of this application;
FIG. 7 is a diagram of a structure of another network architecture according to an embodiment of this application;
FIG. 8 is a diagram of a structure of another network architecture according to an embodiment of this application;
FIG. 9 is a flowchart of a communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of a device according to an embodiment of this application; and
FIG. 13 is a diagram of a structure of a communication system according to an embodiment of this application.

### DESCRIPTION OF EMBODIMENTS

The following further describes embodiments of this application in detail with reference to accompanying drawings.

An environment such as a power transmission line, an oil and gas pipeline, or a river often needs to be monitored. Using a power transmission line as an example, a plurality of nodes need to be deployed along the power transmission line, and any two adjacent nodes are spaced apart from each other by a distance. For any one of the plurality of nodes, the node periodically performs collection on an environment in which the node is located, and periodically sends the collected data to a network management device. The network management device can receive data sent by each node and monitor an ambient environment of the power transmission line based on the data sent by each node.

The plurality of nodes deployed along the power transmission line are usually distributed in a chain. The plurality of nodes form a chain network in a multi-level cascading networking manner, and the nodes in the chain network include a head node, a tail node, and at least one intermediate node located between the head node and the tail node.

For any node other than the head node in the chain network, the node establishes a connection to an upstream neighboring node of the node, and the head node in the chain network communicates with the network management device.

There are two types of connections established between the node and the upstream neighboring node of the node, and the two types are respectively the following first type and second type.

First type: The connection is a wireless connection.

The upstream neighboring node of the node generates a wireless local area network, and the node accesses the wireless local area network, and establishes a wireless connection to the upstream neighboring node of the node through the wireless local area network.

For example, the upstream neighboring node of the node generates a Wi-Fi (which may be referred to as mobile hotspot) network, the node accesses the Wi-Fi network, and establishes a Wi-Fi connection to the upstream neighboring node of the node through the Wi-Fi network.

When the connection is a wireless connection, a position relationship between the node and the upstream neighboring node of the node meets a specified condition. Optionally, the specified condition includes one or more of the following: a distance between the node and the upstream neighboring node of the node is less than a distance threshold, or an altitude difference between the node and the upstream neighboring node of the node is less than a difference threshold.

A wireless connection can be successfully established between the node and the upstream neighboring node of the node only when the position relationship between the node and the upstream neighboring node of the node meets the specified condition. For example, assuming that the wireless connection is a Wi-Fi connection and the distance threshold is 2 km, the Wi-Fi connection can be successfully established between the node and the upstream neighboring node of the node only when the distance between the node and the upstream neighboring node of the node is less than 2 km.

Second type: There is a physical link between the node and the upstream neighboring node of the node, and the connection is a connection established on the physical link.

For any node other than the head node in the chain network, after collecting data, the node sends the data to the network management device. During implementation, the node sends the data to the upstream neighboring node of the node. If the upstream neighboring node is the head node, the head node forwards the data to the network management device. If the upstream neighboring node is not the head node, the upstream neighboring node sends the data to an upstream neighboring node of the upstream neighboring node. For the head node in the chain network, after collecting data, the head node directly sends the data to the network management device. Therefore, data of all nodes except the head node in the chain network is converged to the head node, and the head node forwards the data to the network management device.

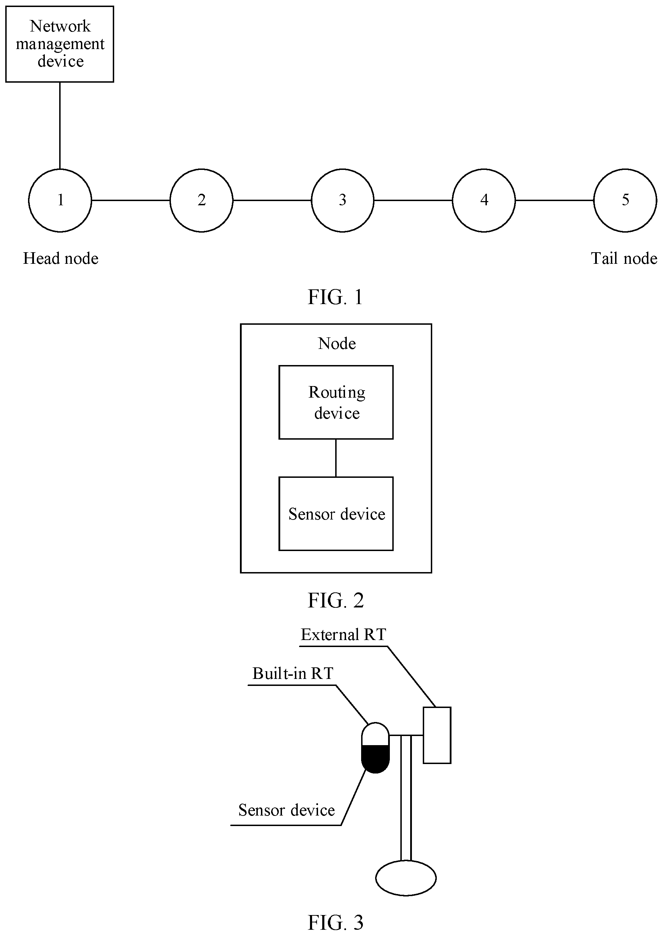

For example, a monitoring scenario of a power transmission line is used as an example. A plurality of power towers used to build the power transmission line are usually distributed in a chain, nodes may be deployed on the power towers, and the nodes deployed on the power towers form a chain network. Refer to FIG. 1. It is assumed that the chain network includes a node 1, a node 2, a node 3, a node 4, and a node 5. The node 1 is a head node and communicates with a network management device. The node 5 is a tail node. An upstream neighboring node of the node 5 is the node 4, and a connection is established between the node 5 and the node 4. An upstream neighboring node of the node 4 is the node 3, and a connection is established between the node 4 and the node 3. An upstream neighboring node of the node 3 is the node 2, and a connection is established between the node 3 and the node 2. An upstream neighboring node of the node 2 is the node 1, and a connection is established between the node 2 and the node 1.

The node 5 performs collection on an environment in which the node 5 is located, and sends the collected data to the node 4. After passing through the node 4, the node 3, and the node 2, the data is received by the node 1, the node 1 sends the data to the network management device, and the network management device receives the data, and monitors, based on the data, the environment in which the node 5 is located. Like the node 5, the node 4, the node 3, and the node 2 send data to the network management device. The node 1 may directly send data to the network device.

Refer to FIG. 2. A node includes a routing device and a sensor device. The sensor device is configured to perform collection on an ambient environment of the node, and the routing device is configured to send the data collected by the sensor device to a network management device. For a node other than a head node in a chain network, a connection is established between a routing device included in the node and a routing device included in an upstream neighboring node of the node. For the data collected by the sensor device of the node, the routing device of the node sends the data to the upstream neighboring node of the node through the connection. The routing device of the upstream neighboring node receives the data, and then forwards the data to the network management device.

In some embodiments, refer to FIG. 3. The routing device of the node may include a built-in repeater (repeater, RT) and an external RT, the built-in RT is integrated with the sensor device, and the external RT is connected to the built-in RT. Optionally, the external RT is connected to the built-in RT through a cable. For example, the external RT is connected to the built-in RT through a network cable.

In some embodiments, the built-in RT of the node establishes a connection to an external RT of the upstream neighboring node of the node. During implementation, the external RT included in the upstream neighboring node of the node generates a wireless local area network, the node includes network information of the wireless local area network, and the built-in RT of the node accesses the wireless local area network based on the network information of the wireless local area network, and establishes a connection to the upstream neighboring node of the node through the wireless local area network.

For example, the wireless local area network generated by the external RT of the upstream neighboring node of the node is a Wi-Fi network, and network information of the Wi-Fi network includes information such as a name and/or a password of the Wi-Fi network. The node includes the network information of the Wi-Fi network, and the built-in RT of the node accesses the Wi-Fi network based on the network information of the Wi-Fi network, and establishes a connection to the upstream neighboring node of the node through the Wi-Fi network.

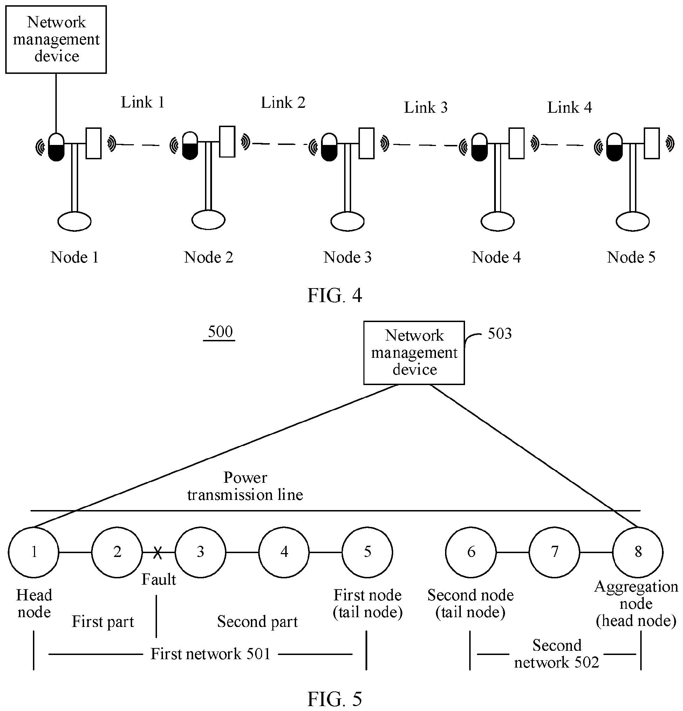

The chain network shown in FIG. 1 is used as an example. A structure of the node 1, the node 2, the node 3, the node 4, and the node 5 in the chain network shown in FIG. 1 is a structure of nodes shown in FIG. 3 and FIG. 4. The node 5 includes network information 4 of a Wi-Fi network 4 generated by an external RT of the node 4, and a built-in RT of the node 5 accesses the Wi-Fi network 4 based on the network information 4, and establishes a Wi-Fi connection 4 with the node 4 through the Wi-Fi network 4. The node 4 includes network information 3 of a Wi-Fi network 3 generated by an external RT of the node 3, and a built-in RT of the node 4 accesses the Wi-Fi network 3 based on the network information 3, and establishes a Wi-Fi connection 3 with the node 3 through the Wi-Fi network 3. The node 3 includes network information 2 of a Wi-Fi network 2 generated by an external RT of the node 2, and a built-in RT of the node 3 accesses the Wi-Fi network 2 based on the network information 2, and establishes a Wi-Fi connection 2 with the node 2 through the Wi-Fi network 2. The node 2 includes network information 1 of a Wi-Fi network 1 generated by an external RT of the node 1, and a built-in RT of the node 2 accesses the Wi-Fi network 1 based on the network information 1, and establishes a Wi-Fi connection 1 with the node 1 through the Wi-Fi network 1.

In some embodiments, the sensor device of the node is a camera, a temperature sensor, a humidity sensor, or the like. Data collected by the camera is an image or a video that is captured for the ambient environment of the node, data collected by the temperature sensor is a temperature of the ambient environment of the node, and data collected by the humidity sensor is humidity of the ambient environment of the node. The network management device is a device such as a server or a terminal.

When a fault occurs in a first network, some nodes in the first network may fail to send data to the network management device. The following describes this case in detail.

When a connection established between two adjacent nodes in the chain network is a first-type connection (wireless connection), for a node in the chain network, an upstream neighboring node of the node is an intermediate node. When a communication fault occurs between the node and the upstream neighboring node of the node, if a position relationship between the node and the upstream neighboring node of the intermediate node does not meet a specified condition, a wireless connection cannot be established between the node and the upstream neighboring node of the intermediate node. In this way, the node, the tail node, and a node located between the node and the tail node cannot continue to send data to the network management device. The fault that occurs in the first network is the communication fault between the node and the upstream neighboring node of the node.

If a position relationship between the node and the upstream neighboring node of the intermediate node meets a specified condition, a wireless connection can be established between the node and the upstream neighboring node of the intermediate node. In this way, the node, the tail node, and a node located between the node and the tail node can still continue to send data to the network management device.

The communication fault between the node and the upstream neighboring node of the node may be a fault that occurs on the upstream neighboring node of the node or a fault that occurs on an interface for communication between the node and the upstream neighboring node of the node.

For example, refer to FIG. 1. It is assumed that a communication fault occurs between the node 2 and the node 3. If a position relationship between the node 1 and the node 3 meets a specified condition, the node 3 establishes a wireless connection to the node 1. The node 3, the node 4, and the node 5 can still continue to send data to the network management device. If a position relationship between the node 1 and the node 3 does not meet a specified condition, the node 3 cannot establish a wireless connection to the node 1. The node 3, the node 4, and the node 5 cannot continue to send data to the network management device, resulting in a data sending failure, communication interruption, and low reliability of data transmission.

When a connection established between two adjacent nodes in the chain network is a second-type connection (a connection established on a physical link between the two nodes); and when a communication fault occurs between the node and the upstream neighboring node of the node, the node, the tail node, and a node located between the node and the tail node cannot continue to send data to the network management device.

The communication fault between the node and the upstream neighboring node of the node may be a fault that occurs on the upstream neighboring node of the node, a fault that occurs on a physical link between the node and the upstream neighboring node of the node, or a fault that occurs on an interface connecting the node and a physical link.

For example, refer to FIG. 1. Two adjacent nodes in the first network are connected to each other through a physical link. Assuming that a communication fault occurs between the node 2 and the node 3, the node 3, the node 4, and the node 5 cannot continue to send data to the network management device, resulting in a data sending failure, communication interruption, and low reliability of data transmission.

To recover communication and improve reliability of data transmission, refer to FIG. 5. An embodiment of this application provides a network architecture 500. The network architecture 500 includes a first network 501 and a second network 502, and the first network 501 is a chain network.

The first network 501 includes a first node, the second network 502 includes a second node, the first node and the second node can communicate with each other, and the first node is a node other than a head node in the first network 501.

When the first network 501 is normal, communication between the first node and the second node is interrupted. When a fault occurs in the first network 501, and communication between the first node and the head node in the first network 501 is interrupted because of the fault, the first node performs a communication connection to the second node.

The head node in the first network 501 communicates with a network management device 503. The second network 502 includes an aggregation node, a node other than the aggregation node in the second network 502 communicates with the aggregation node, and the aggregation node further communicates with the network management device 503.

A monitoring scenario such as a monitoring scenario along a power transmission line, a monitoring scenario along an oil and gas pipeline, or a monitoring scenario along a river is divided into a first area and a second area. A node in the first network 501 is deployed in the first area in the monitoring scenario. The node in the first network 501 collects data of an environment in the first area. In addition, the data collected by the node in the first network 501 is aggregated to the head node, and the head node forwards the data to the network management device 503.

A node in the second network 502 is deployed in the second area in the monitoring scenario. The node in the second network 502 collects data of an environment in the second area. In addition, the data collected by the node in the second network 502 is aggregated to the aggregation node, and the aggregation node forwards the data to the network management device 503.

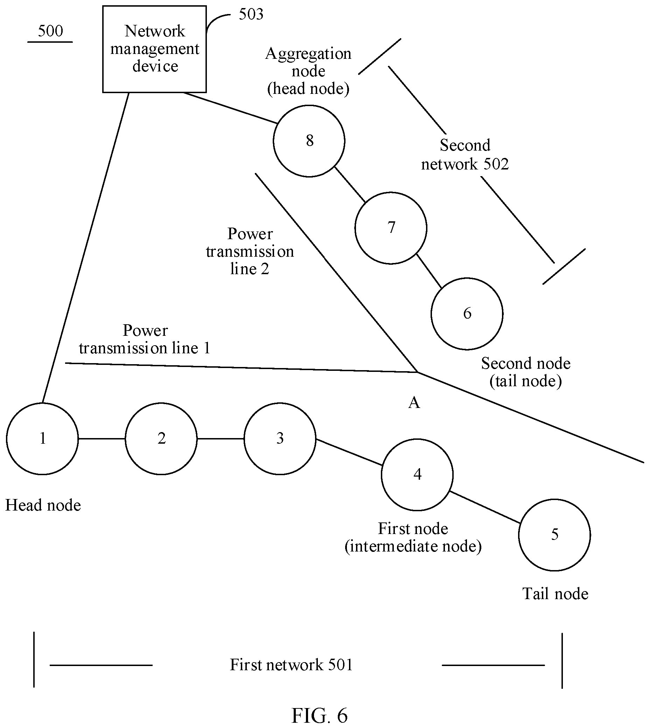

Refer to FIG. 5. The first node is a tail node in the first network 501. Alternatively, refer to FIG. 6. The first node is an intermediate node between a head node and a tail node in a first network 501.

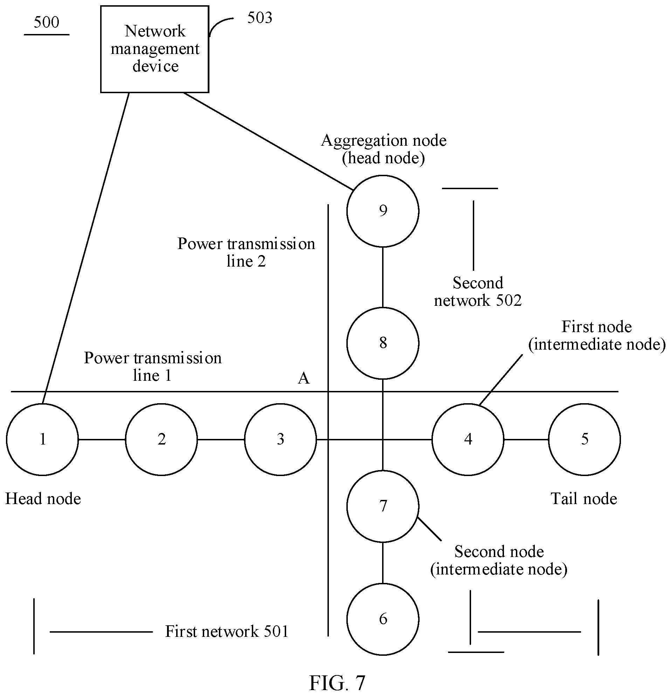

Refer to FIG. 5 or FIG. 6. A second network 502 is a chain network, and a second node is a tail node in the second network 502. Alternatively, refer to FIG. 7. A second node is an intermediate node between a head node and a tail node in a second network 502. An aggregation node in the second network 502 is the head node in the second network 502.

A scenario of a power transmission line is used as an example. FIG. 5 shows an example of a power transmission line. One power transmission line is divided into two segments. Nodes in the first network 501 are deployed along one segment, and nodes in the second network 502 are deployed along the other segment. In this scenario, the first node may be the tail node (the node 5) in the first network 501, and the second node may be the tail node (the node 6) in the second network 502.

FIG. 6 shows another example of a power transmission line, where two power transmission lines converge. As shown in FIG. 6, a power transmission line 1 and a power transmission line 2 converge at a point A, nodes in the first network 501 are deployed along the power transmission line 1, and nodes in the second network 502 are deployed along the power transmission line 2. In this scenario, the first node may be the intermediate node (the node 4) that is in the first network 501 and that is close to the point A, and the second node may be the tail node (the node 6) that is in the second network 502 and that is close to the point A.

FIG. 7 shows another example of a power transmission line, where two power transmission lines cross. As shown in FIG. 7, a power transmission line 1 and a power transmission line 2 cross at a point A, nodes in the first network 501 are deployed along the power transmission line 1, and nodes in the second network 502 are deployed along the power transmission line 2. In this scenario, the first node may be the intermediate node (the node 4) that is in the first network 501 and that is close to the point A, and the second node may be the intermediate node (the node 7) that is in the second network 502 and that is close to the point A.

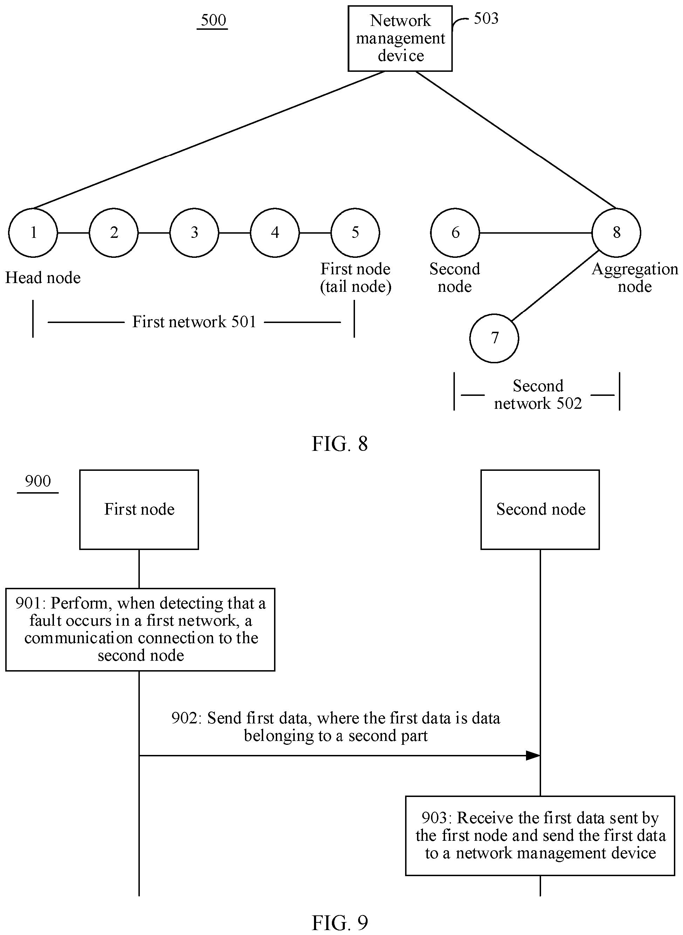

Refer to FIG. 8. A second network 502 is a star network, a node other than an aggregation node in the second network 502 communicates with the aggregation node, and a second node is the aggregation node or a node other than the aggregation node in the second network 502.

When a connection between two adjacent nodes in a first network 501 is a first-type connection (a wireless connection), a first node is an intermediate node between a specified node and a tail node in the first network 501, or a first node is a tail node in the first network 501.

A position relationship between a downstream neighboring node of the specified node and an upstream neighboring node of the specified node does not meet a specified condition. To be specific, a distance between the downstream neighboring node of the specified node and the upstream neighboring node of the specified node is greater than or equal to a distance threshold, and/or an altitude difference between the downstream neighboring node of the specified node and the upstream neighboring node of the specified node is greater than or equal to a difference threshold.

When a communication fault occurs between the specified node and the downstream neighboring node of the specified node, the downstream neighboring node of the specified node cannot establish a wireless connection to the upstream neighboring node of the specified node through a wireless local area network generated by the upstream neighboring node of the specified node. In this way, the intermediate node located between the specified node and the tail node cannot send data to a head node, and the tail node cannot send data to the head node either. In this case, when detecting the fault, the first node performs a communication connection to the second node, so that the intermediate node between the specified node and the tail node sends data to the second network, and the tail node sends data to the second network, for example, refer to FIG. 5. The first network 501 includes a node 1, a node 2, a node 3, a node 4, and a node 5. It is assumed that the specified node is the node 2, an upstream neighboring node of the node 2 is the node 1, and a downstream neighboring node of the node 2 is the node 3. A distance between the node 1 and the node 3 is greater than or equal to a distance threshold, and/or an altitude difference between the node 1 and the node 3 is greater than or equal to a difference threshold. When a communication fault occurs between the node 2 and the node 3, the node 3 cannot establish a wireless connection to the node 1. To ensure, after a fault occurs in the first network, that data can be successfully sent to the network management device 503 when the communication fault occurs between the node 2 and the node 3, the first node is the node 3, the node 4, or the node 5.

In some embodiments, the second node is configured to generate a wireless local area network, and the first node includes network information of the wireless local area network. The first node accesses the wireless local area network based on the network information, and establishes a wireless connection to the second node in the wireless local area network, to implement a communication connection between the first node and the second node.

In some embodiments, the first node in the first network 501 includes a built-in RT, the second node in the second network 502 includes an external RT, the external RT of the second node is used to generate the wireless local area network, and the network information of the wireless local area network may be configured in the first node. When the first node in the first network 501 and the second node in the second network 502 are deployed, the built-in RT of the first node is connected to the second node based on the network information. To be specific, when the first node and the second node are deployed, whether the first node can be connected to the second node is tested. After the first node is successfully connected to the second node, the connection between the first node and the second node is interrupted, and the first network 501 and the second network 502 operate independently and normally.

When a connection between two adjacent nodes in the second network 502 is a first-type connection (a wireless connection), the second node is an intermediate node between a specified node and the tail node in the second network 502, or the second node is the tail node in the second network 502.

The meaning of the specified node in the second network 502 is the same as the meaning of the specified node in the first network 501, and is not described in detail herein again.

When a connection between two adjacent nodes in the second network 502 is a first-type connection (wireless connection), if a fault occurs in the second network 502, the second node can perform an operation the same as that performed by the first node. The second node performs a communication connection to the first node, and sends data to the network management device 503 through the first network 501, to recover communication and improve reliability of data transmission.

In some embodiments, the first node includes an external RT, the second node includes a built-in RT, the external RT of the first node is used to generate a wireless local area network, and network information of the wireless local area network is configured in the second node. When the first node in the first network 501 and the second node in the second network 502 are deployed, the built-in RT of the second node is connected to the first node based on the network information. To be specific, when the first node and the second node are deployed, whether the second node can be connected to the first node is tested. After the second node is successfully connected to the first node, the connection between the first node and the second node is interrupted, and the first network 501 and the second network 502 operate independently and normally.

In some embodiments, the first node and the second node are connected through a physical link. When the first network is normal, an interface state of an interface that is on the first node and that is connected to the physical link is a disabled state. When a fault occurs in the first network, the first node sets the interface state of the interface from the disabled state to an enabled state, to establish a connection to the second node on the physical link, that is, implement a communication connection between the first node and the second node.

Refer to FIG. 9. This application provides a communication method 900. The method 900 is applied to the network architecture 500 shown in FIG. 5, FIG. 6, or FIG. 7. The method 900 includes the following procedure of step 901 to step 903.

Step 901: A first node performs, when detecting that a fault occurs in a first network, a communication connection to a second node.

The first network is a chain network, the first network is divided into a first part and a second part because of the fault, the first part includes a head node in the first network, communication between the first part and the second part is interrupted, and the second part includes the first node.

A node other than the head node in the first part further communicates with the head node. The node other than the head node in the first part may further continue to perform collection on an environment in which the node is located and send the collected data to the head node. The head node receives the data and forwards the data to a network management device. The head node may further continue to perform collection on an environment in which the head node is located, and send the data to the network management device.

Because the communication between the first part and the second part is interrupted, that is, communication between each node in the second part and the head node is interrupted, each node in the second part cannot send data to the head node.

A node other than the first node in the second part further communicates with the first node.

As listed below, the first node performs a communication connection to the second node in the following manner 1 and manner 2. Certainly, the first node may also perform a communication connection to the second node in other manners, which are not listed one by one herein.

Manner 1: The second node generates a wireless local area network, and the first node includes network information of the wireless local area network. In step 901, when detecting that a fault occurs in the first network, the first node obtains network information of a wireless local area network of the second node, and performs a communication connection to the second node based on the network information. During implementation, the first node accesses the wireless local area network based on the network information, and establishes a wireless connection to the second node through the wireless local area network, to implement a communication connection to the second node.

In some embodiments, the network information may be pre-configured by an administrator on the first node. The network information may include information such as a name and/or a password of the wireless local area network.

In the manner 1, a position relationship between the first node and the second node meets a specified condition. The specified condition includes one or more of the following: a distance between the first node and the second node is less than a distance threshold, or an altitude difference between the first node and the second node is less than a difference threshold.

In the manner 1, the first node may include network information of a wireless local area network of at least one node, the at least one node is a node in the second network, and a position relationship between the first node and each of the at least one node meets a specified condition. Optionally, the first node may select, from the at least one node, a node having best quality of communication with the first node as the second node, the first node may select, from the at least one node, a node having quality of communication with the first node exceeding a quality threshold as the second node, or the first node may select, from the at least one node, a node having a shortest distance from the first node as the second node. The first node performs a communication connection to the second node.

For example, refer to FIG. 5. The first network includes a node 1, a node 2, a node 3, a node 4, and a node 5. The node 1 is a head node in the first network, the node 5 is a tail node in the first network, and the node 2, the node 3, and the node 4 are intermediate nodes in the first network. The second network includes a node 6, a node 7, and a node 8. The node 8 is an aggregation node and communicates with the network management device. The node 6 and the node 7 communicate with the node 8 separately.

It is assumed that the first node is the node 5 in the first network and the second node is the node 6 in the second network. A fault occurs in the first network, and the fault is a communication fault between the node 2 and the node 3. Because of the fault, the first network is divided into a first part and a second part, where the first part includes the node 1 and the node 2 and the second part includes the node 3, the node 4, and the node 5, and communication between the first part and the second part is interrupted. The node 2 and the node 1 in the first part can still send data to the network management device.

The first node includes network information of a wireless local area network generated by the second node. The first node accesses the wireless local area network based on the network information, and performs a communication connection to the second node through the wireless local area network. In this way, the node 3, the node 4, and the node 5 (the first node) in the second part send data to the network management device through the second network.

Manner 2: The first node and the second node are connected through a physical link, and an interface state of an interface that is on the first node and that is connected to the physical link is a disabled state. In step 901, when detecting that a fault occurs in the first network, the first node sets the interface state of the interface from the disabled state to an enabled state, and performs a communication connection to the second node based on the physical link. During implementation, the first node establishes a connection to the second node on the physical link, to implement a communication connection to the second node.

For example, refer to FIG. 5. The node 5 in the first network is connected to the node 6 in the second network through a physical link, and a state of an interface that is on the node 5 and that is connected to the physical link is the disabled state. A fault occurs in the first network, and the fault is a communication fault between the node 2 and the node 3. Because of the fault, the first network is divided into a first part and a second part, where the first part includes the node 1 and the node 2 and the second part includes the node 3, the node 4, and the node 5. The node 5 sets the state of the interface connected to the physical link to the enabled state, and performs a communication connection to the node 6 on the physical link. In this way, the node 3, the node 4, and the node 5 in the second part send data to the network management device through the second network.

In some embodiments, the second part further includes a third node, and the fault that occurs in the first network is a communication fault between the third node and an upstream neighboring node of the third node. In step 901, the first node receives a first fault identifier, where the first fault identifier is sent by the third node when detecting that the fault occurs in the first network; and determines, based on the first fault identifier, that the fault occurs in the first network.

The third node and the upstream neighboring node of the third node periodically send heartbeat packets to each other. To be specific, the third node periodically receives a heartbeat packet sent by the upstream neighboring node of the third node, and the third node periodically sends a heartbeat packet to the upstream neighboring node of the third node. When the third node detects that a time length for which the heartbeat packet sent by the upstream neighboring node of the third node has not been received reaches a time length threshold, the third node detects that a fault occurs in communication between the third node and the upstream neighboring node of the third node, and sends the first fault identifier to a node other than the third node in the second part.

The node other than the third node in the second part receives the first fault identifier, and determines, based on the first fault identifier, that a fault occurs in the first network.

In some embodiments, the first fault identifier indicates a fault position of the fault that occurs in the first network. Optionally, the first fault identifier includes identification information of the third node, and the first fault identifier indicates that the fault position of the fault is between the third node and the upstream neighboring node of the third node. The node other than the third node in the second part determines the fault position based on the first fault identifier.

The heartbeat packet may be a neighboring multicast packet or the like.

The following lists an example in which the third node further sends the first fault identifier to a node other than the third node in the second part. The example is as follows:
The third node sends a first heartbeat packet to the downstream neighboring node of the third node, where the first heartbeat packet includes the first fault identifier. The downstream neighboring node receives the first heartbeat packet, and sends a second heartbeat packet to a downstream neighboring node of the downstream neighboring node, where the second heartbeat packet includes the first fault identifier.

For example, refer to FIG. 5. When the node 3 detects that a time length for which the third heartbeat packet sent by the node 2 has not been received reaches a time length threshold, the node 3 detects that a fault occurs in communication between the node 3 and an upstream neighboring node (the node 2) of the node 3. The second part includes a node 3, a node 4, and a node 5. The node 3 sends a first heartbeat packet to the node 4, where the first heartbeat packet includes a first fault identifier. The node 4 receives the first heartbeat packet, determines, based on the first fault identifier in the first heartbeat packet, that a fault occurs in the first network, and sends a second heartbeat packet to a downstream neighboring node (the node 5) of the node 4, where the second heartbeat packet includes the first fault identifier. The node 5 receives the second heartbeat packet, and determines, based on the first fault identifier in the second heartbeat packet, that a fault occurs in the first network.

In some embodiments, the fault that occurs in the first network is a communication fault between the first node and an upstream neighboring node of the first node.

The first node and the upstream neighboring node of the first node periodically send heartbeat packets to each other. To be specific, the first node periodically receives a heartbeat packet sent by the upstream neighboring node of the first node, and the first node periodically sends a heartbeat packet to the upstream neighboring node of the first node. When the first node detects that a time length for which the heartbeat packet sent by the upstream neighboring node of the first node has not been received reaches a time length threshold, the first node detects that a fault occurs in communication between the first node and the upstream neighboring node of the first node.

The second part further includes a node other than the first node. The node other than the first node communicates with the first node. The first node further sends a second fault identifier to the node other than the first node in the second part. The node other than the first node in the second part receives the second fault identifier, and detects, based on the second fault identifier, that a fault occurs in the first network. For a process in which the first node sends the second fault identifier to the node other than the first node in the second part, refer to the foregoing process in which the third node sends the first fault identifier to the node other than the third node in the second part, and details are not described herein again.

In some embodiments, the second fault identifier indicates a fault position of the fault that occurs in the first network. Optionally, the second fault identifier includes identification information of the first node, and the second fault identifier indicates that the fault position of the fault is between the first node and the upstream neighboring node of the first node.

In some embodiments, after the first node performs a communication connection to the second node, a node in the second part further requests the aggregation node in the second network to allocate an address, and the node communicates with the aggregation node in the second network based on the address. For example, when the node sends data to the aggregation node in the second network, the address of the node is a source address of the data.

Step 902: The first node sends first data to the second node. The first data is data belonging to the second part.

In step 902, the first data may be data of the first node, and the first data may include data collected by the first node for an environment in which the first node is located, and/or data of the first node. Optionally, the data of the first node may include one or more of the following: a position of the first node, device attribute data of the first node, data generated by the first node, or the like. Alternatively, in step 902, the first data is data that is sent by a node other than the first node in the second part and that is received by the first node.

For any node other than the first node in the second part, for ease of description, the node is referred to as a fourth node. The first data may be data of the fourth node, and the first data may include data collected by the fourth node for an environment in which the fourth node is located, and/or data of the fourth node. Optionally, the data of the fourth node may include one or more of the following: a position of the fourth node, device attribute data of the fourth node, data generated by the fourth node, or the like.

For the fourth node, when receiving a fault identifier (the first fault identifier or the second fault identifier), the fourth node detects, based on the fault identifier, that a fault occurs in the first network and a fault position of the fault, and then sends the first data to the first node.

If the fourth node is located between the fault position and the first node, the fourth node needs to change a direction of sending data, and then sends the first data to the first node.

Before a fault occurs in the first network, a direction in which the fourth node sends data is a direction in which the fourth node sends data to the head node in the first network. When a fault occurs in the first network and the fourth node is located between the fault position and the first node, the fourth node changes the direction of sending data to a direction of sending data to the first node.

For example, refer to FIG. 5. A fault that occurs in the first network is a communication fault between the node 2 and the node 3, the first node is the tail node (the node 5), and the node 3 and the node 4 are nodes between a position of the fault and the node 5. Therefore, after detecting that the fault occurs in the first network, the node 3 and the node 4 change a direction of sending data from a direction of sending data to the head node (the node 1) in the first network to a direction of sending data to the tail node (the node 5) in the first network.

Then, the node 3 sends data 1 to the node 4, where the data 1 is data collected by the node 3, the node 4 forwards the data 1 to the node 5, and then the node 5 forwards the data 1 to the second node (the node 6) in the second network. Similarly, the node 4 sends data 2 to the node 5, where the data 2 is data collected by the node 4, the node 5 forwards the data 2 to the second node (the node 6) in the second network, and the node 5 sends data 3 to the second node (the node 6) in the second network, where the data 3 is data collected by the node 6.

Step 903: The second node receives the first data sent by the first node and sends the first data to a network management device.

Because the second node communicates with the aggregation node in the second network, the aggregation node in the second network communicates with the network management device. The second node sends the first data to the aggregation node in the second network, and the aggregation node in the second network sends the first data to the network management device.

For example, refer to FIG. 5. After a fault occurs in the first network, the first node (the node 5) sends data 1, data 2, and data 3 to the second node (the node 6). The node 6 receives the data 1, the data 2, and the data 3, and sends the data 1, the data 2, and the data 3 to the node 7. The node 7 sends the data 1, the data 2, and the data 3 to the node 8. The node 8 then sends the data 1, the data 2, and the data 3 to the network management device.

After a fault occurs in the first network, the fault that occurs in the first network may be repaired. When the first network is recovered, the network management device sends recovery information to the first node, where the recovery information indicates that the communication between the first part and the second part of the first network is recovered. Optionally, during implementation, the network management device sends recovery information to the aggregation node in the second network. The aggregation node in the second network receives the recovery information, and sends the recovery information to the second node in the second network. The second node receives the recovery information, and sends the recovery information to the first node.

The first node receives the recovery information sent by the second node, interrupts the communication connection to the second node based on the recovery information, and sends second data to the head node in the first network, where the second data is data belonging to the second part, and the first data and the second data are data obtained by the first node at different moments.

The first node further sends the recovery information to a node other than the first node in the second part. For a node located between the fault position of the fault that occurs in the first network and the first node, after receiving the recovery information, the node changes a direction of sending data, and then sends data to the head node in the first network.

The node changes a direction of sending data from a direction of sending data to the first node to a direction of sending data to the head node in the first network.

The second data is data of the first node. Alternatively, when the first node is an intermediate node in the first network, the second data may be data sent by the tail node in the first network, or the second data is data sent by an intermediate node between the first node and the tail node in the first network.

In some embodiments, when the first network is recovered, a node in the second part further requests the head node in the first network to allocate an address, and the node communicates with the head node in the first network based on the address. For example, when the node sends data to the aggregation node in the first network, the address of the node is a source address of the data.

In this embodiment of this application, the first node in the first network can communicate with the second node in the second network. When the first network is normal, communication between the first node and the second node is interrupted, to avoid forming a ring network. When a fault occurs in the first network, the first network is divided into a first part and a second part because of the fault. The first part includes the head node in the first network, and the second part includes the first node. When detecting that the fault occurs in the first network, the first node performs a communication connection to the second node in the second network, and sends first data to the second node, where the first data is data of the second part. Then, the second node sends the first data to the network management device. In this way, the node in the second part can still continue to send data, to recover communication and improve reliability of data transmission.

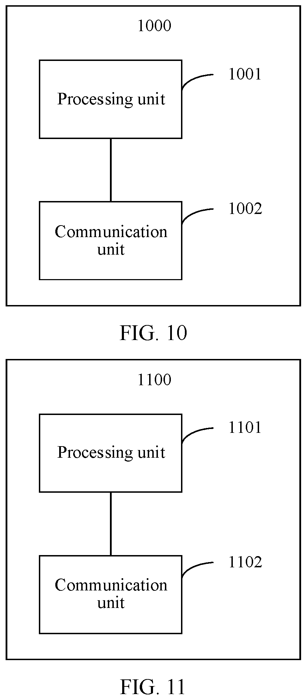

Refer to FIG. 10. An embodiment of this application provides a communication apparatus 1000. The apparatus 1000 is deployed on the first node in the network architecture 500 shown in FIG. 5, FIG. 6, FIG. 7, or FIG. 8, or the apparatus 1000 is deployed on the first node in the method 900 shown in FIG. 9. The apparatus 1000 includes:
a processing unit 1001, configured to perform a communication connection to a second node in a second network when a fault occurs in a first network, where the first network is a chain network, the first network is divided into a first part and a second part because of the fault, the first part includes a head node in the first network, communication between the first part and the second part is interrupted, and the second part includes the apparatus 1000; and
a communication unit 1002, configured to send first data to the second node, where the first data is data belonging to the second part.

Optionally, for a detailed implementation process in which the processing unit 1001 performs a communication connection to the second node in the second network, refer to related content in step 901 in the method 900 shown in FIG. 9. Details are not described herein again.

Optionally, for a detailed implementation process in which the communication unit 1002 sends the first data to the second node, refer to related content in step 902 in the method 900 shown in FIG. 9. Details are not described herein again.

Optionally, a position relationship between the apparatus 1000 and the second node meets a specified condition.

Optionally, the specified condition includes one or more of the following: a distance between the apparatus 1000 and the second node is less than a distance threshold, or an altitude difference between the apparatus 1000 and the second node is less than a difference threshold.

Optionally, the processing unit 1001 is configured to:
obtain network information of a wireless local area network of the second node; and
perform a communication connection to the second node based on the network information.

Optionally, for a detailed implementation process in which the processing unit 1001 obtains the network information of the wireless local area network of the second node and performs the communication connection to the second node based on the network information, refer to related content in step 901 in the method 900 shown in FIG. 9. Details are not described herein again.

Optionally, the first data is data collected by the apparatus 1000 for an environment in which the apparatus 1000 is located.

Optionally, the communication unit 1002 is further configured to receive the first data, where the first data is data collected by a node in the second part other than the apparatus 1000 for an environment in which the node is located.

Optionally, for a detailed implementation process in which the communication unit 1002 receives the first data, refer to related content in step 902 in the method 900 shown in FIG. 9. Details are not described herein again.

Optionally, the second part further includes a third node, and the fault is a communication fault between the third node and an upstream neighboring node of the third node;
the communication unit 1002 is further configured to receive a fault identifier, where the fault identifier is sent by the third node when detecting that the fault occurs in the first network; and
the processing unit 1001 is further configured to determine, based on the fault identifier, that the fault occurs in the first network.

Optionally, for a detailed implementation process in which the communication unit 1002 receives the fault identifier, refer to related content in step 901 in the method 900 shown in FIG. 9. Details are not described herein again.

Optionally, for a detailed implementation process in which the processing unit 1001 determines that the fault occurs in the first network, refer to related content in step 901 in the method 900 shown in FIG. 9. Details are not described herein again.

Optionally, the fault is a communication fault between the apparatus 1000 and an upstream neighboring node of the apparatus 1000.

Optionally, the communication unit 1002 is further configured to:
receive recovery information sent by the second node, where the recovery information indicates that the communication between the first part and the second part is recovered; and
send second data to the head node based on the recovery information, where the second data is data belonging to the second part, and the first data and the second data are data obtained by the apparatus 1000 at different moments.

Optionally, for a detailed implementation process in which the communication unit 1002 receives the recovery information and sends the second data, refer to related content in step 903 in the method 900 shown in FIG. 9. Details are not described herein again.

Optionally, the apparatus 1000 is a tail node in the first network.

Optionally, the second network is a chain network.

Optionally, the second node is a tail node in the second network.

In this embodiment of this application, when a fault occurs in the first network, the first network is divided into a first part and a second part because of the fault, the first part includes a head node in the first network, communication between the first part and the second part is interrupted, and the second part includes the apparatus. The processing unit performs a communication connection to the second node in the second network when the fault occurs in the first network, and the communication unit sends the first data to the second node, where the first data is data belonging to the second part. In this way, the node in the second part can continue to send the data belonging to the second part through the second network, to recover the communication of the node in the second part.

Refer to FIG. 11. An embodiment of this application provides a communication apparatus 1100. The apparatus 1100 is deployed on the second node in the network architecture 500 shown in FIG. 5, FIG. 6, FIG. 7, or FIG. 8, or the apparatus 1100 is deployed on the second node in the method 900 shown in FIG. 9. The apparatus 1100 includes:
a processing unit 1101, configured to perform a communication connection to a first node in a first network, where the apparatus 1100 is a node in a second network, a fault occurs in the first network, the first network is divided into a first part and a second part because of the fault, the first part includes a head node in the first network, communication between the first part and the second part is interrupted, and the second part includes the first node; and
a communication unit 1102, configured to: receive first data sent by the first node, where the first data is data belonging to the second part; and send the first data.

Optionally, for a detailed implementation process in which the processing unit 1101 performs a communication connection to the first node in the first network, refer to related content in step 901 in the method 900 shown in FIG. 9. Details are not described herein again.

Optionally, for a detailed implementation process in which the communication unit 1102 receives the first data and sends the first data, refer to related content in step 903 in the method 900 shown in FIG. 9. Details are not described herein again.

Optionally, a position relationship between the first node and the apparatus 1100 meets a specified condition.

Optionally, the specified condition includes one or more of the following: a distance between the first node and the apparatus 1100 is less than a distance threshold, or an altitude difference between the first node and the apparatus 1100 is less than a difference threshold.

Optionally, the communication unit 1102 is further configured to:
receive recovery information, where the recovery information indicates that the communication between the first part and the second part is recovered; and
send the recovery information to the first node, where the recovery information further indicates that the first node sends second data to the head node, the second data is data belonging to the second part, and the first data and the second data are data obtained by the first node at different moments.

Optionally, for a detailed implementation process in which the communication unit 1102 receives the recovery information and sends the recovery information to the first node, refer to related content in step 903 in the method 900 shown in FIG. 9. Details are not described herein again.

Optionally, the first node is a tail node in the first network.

Optionally, the second network is a chain network.

Optionally, the apparatus 1100 is a tail node in the second network.

In this embodiment of this application, when a fault occurs in the first network, the first network is divided into a first part and a second part because of the fault, the first part includes a head node in the first network, communication between the first part and the second part is interrupted, and the second part includes the first node. The processing unit performs a communication connection to the first node in the first network, and the communication unit receives the first data sent by the first node and sends the first data, where the first data is data belonging to the second part. In this way, the first node can continue to send the data belonging to the second part through the second network, to recover the communication of the node in the second part.

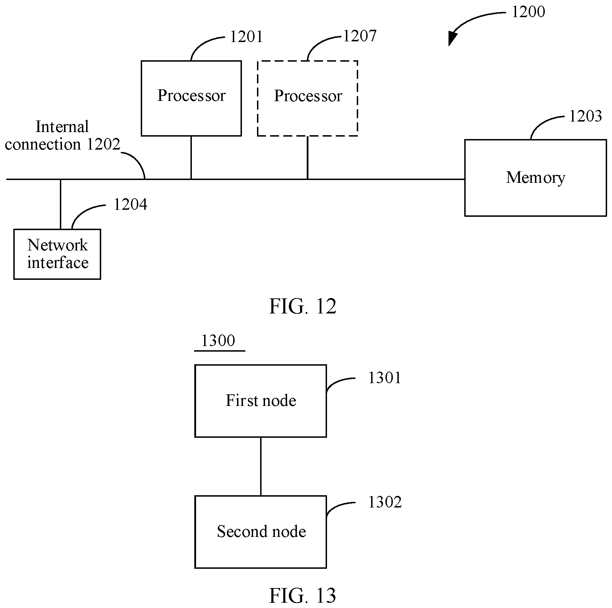

Refer to FIG. 12. An embodiment of this application provides a diagram of a device 1200. The device 1200 may be the first node or the second node according to any one of the foregoing embodiments. For example, the device 1200 may be the first node or the second node in the network architecture 500 shown in FIG. 5, FIG. 6, FIG. 7, or FIG. 8, or the device 1200 may be the first node or the second node in the method 900 shown in FIG. 9. The device 1200 includes at least one processor 1201, an internal connection 1202, a memory 1203, and at least one communication interface 1204.

The device 1200 is an apparatus of a hardware structure.

In some embodiments, the device 1200 may be configured to implement functional modules in the apparatus 1000 shown in FIG. 10. For example, a person skilled in the art may figure out that the processing unit 1001 in the apparatus 1000 shown in FIG. 10 may be implemented by invoking code in the memory 1203 by the at least one processor 1201. The communication unit 1002 in the apparatus 1000 shown in FIG. 10 may be implemented through the at least one communication interface 1204. The device 1200 may be further configured to implement a function of the first node in any one of the foregoing embodiments.

In some embodiments, the device 1200 may be configured to implement functional modules in the apparatus 1100 shown in FIG. 11. For example, a person skilled in the art may figure out that the processing unit 1101 in the apparatus 1100 shown in FIG. 11 may be implemented by invoking code in the memory 1203 by the at least one processor 1201. The communication unit 1102 in the apparatus 1100 shown in FIG. 11 may be implemented through the at least one communication interface 1204. The device 1200 may be further configured to implement a function of the second node in any one of the foregoing embodiments.

The processor 1201 is, for example, a general-purpose central processing unit (Central Processing Unit, CPU), a digital signal processor (Digital Signal Processor, DSP), a network processor (Network Processor, NP), a graphics processing unit (Graphics Processing Unit, GPU), a neural-network processing unit (Neural-network Processing Unit, NPU), a data processing unit (Data Processing Unit, DPU), a microprocessor, or one or more integrated circuits configured to implement the solutions of this application. For example, the processor 1201 includes an application-specific integrated circuit (Application-specific Integrated Circuit, ASIC), a programmable logic device (Programmable Logic Device, PLD) or another programmable logic device, a transistor logic device, a hardware component, or any combination thereof. The PLD may be a complex programmable logic device (Complex Programmable Logic Device, CPLD), a field-programmable gate array (Field-Programmable Gate Array, FPGA), a generic array logic (Generic Array Logic, GAL), or any combination thereof. The processor may implement or execute various logical blocks, modules, and circuits described with reference to the content disclosed in embodiments of this application. Alternatively, the processor may be a combination of processors implementing a computing function, for example, a combination of one or more microprocessors, or a combination of a DSP and a microprocessor.

The internal connection 1202 may include a path for transmitting information between the foregoing components. The internal connection 1202 may be a board, a bus, or the like. The bus may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 12, but this does not mean that there is only one bus or only one type of bus.

The at least one communication interface 1204 is any apparatus such as a transceiver, and is configured to communicate with another device or a communication network. The communication network may be an Ethernet, a radio access network, a wireless local area network (Wireless Local Area Network, WLAN), or the like. The communication interface 1204 may include a wired communication interface, and may further include a wireless communication interface. Specifically, the communication interface 1204 may be an Ethernet interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network WLAN interface, a cellular network communication interface, or a combination thereof. The Ethernet interface may be an optical interface, an electrical interface, or a combination thereof. In this embodiment of this application, the communication interface 1204 may be used by the device 1200 to communicate with another device.

The memory 1203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor through the bus. The memory 1203 may be alternatively integrated with the processor 1201.

During specific implementation, in an embodiment, the processor 1201 may include one or more CPUs such as a CPU 0 and a CPU 1 in FIG. 12. Each of the CPUs may be a single-core processor, or may be a multi-core processor. The processor herein may be one or more devices, circuits, and/or processing cores configured to process data (for example, computer program instructions).

During specific implementation, in an embodiment, the device 1200 may include a plurality of processors, for example, the processor 1201 and a processor 1207 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 13. An embodiment of this application further provides a communication system 1300. The system includes the apparatus 1000 shown in FIG. 10 and the apparatus 1100 shown in FIG. 11. The apparatus 1000 shown in FIG. 10 may be a first node 1301, and the apparatus 1100 shown in FIG. 11 may be a second node 1302.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, improvement, or the like made within the principle of this application should fall within the protection scope of this application.

## Claims

1. A communication method, wherein the method comprises:
performing, by a first node, a communication connection to a second node in a second network when a fault occurs in a first network, wherein the first network is a chain network, the first network is divided into a first part and a second part because of the fault, the first part comprises a head node in the first network, communication between the first part and the second part is interrupted, and the second part comprises the first node; and
sending, by the first node, first data to the second node, wherein the first data is data belonging to the second part.

2. The method according to claim 1, wherein a position relationship between the first node and the second node meets a specified condition.

3. The method according to claim 2, wherein the specified condition comprises one or more of the following: a distance between the first node and the second node is less than a distance threshold, or an altitude difference between the first node and the second node is less than a difference threshold.

4. The method according to any one of claims 1 to 3, wherein the performing, by a first node, a communication connection to a second node in a second network comprises:
obtaining, by the first node, network information of a wireless local area network of the second node; and
performing, by the first node, a communication connection to the second node based on the network information.

5. The method according to any one of claims 1 to 4, wherein the first data is data collected by the first node for an environment in which the first node is located.

6. The method according to any one of claims 1 to 4, wherein the method further comprises:
receiving, by the first node, the first data, wherein the first data is data collected by a node in the second part other than the first node for an environment in which the node is located.

7. The method according to any one of claims 1 to 6, wherein the second part further comprises a third node, the fault is a communication fault between the third node and an upstream neighboring node of the third node, and the method further comprises:
receiving, by the first node, a fault identifier, wherein the fault identifier is sent by the third node when detecting that the fault occurs in the first network; and
determining, by the first node based on the fault identifier, that the fault occurs in the first network.

8. The method according to any one of claims 1 to 6, wherein the fault is a communication fault between the first node and an upstream neighboring node of the first node.

9. The method according to any one of claims 1 to 8, wherein the method further comprises:
receiving, by the first node, recovery information sent by the second node, wherein the recovery information indicates that the communication between the first part and the second part is recovered; and
sending, by the first node, second data to the head node based on the recovery information, wherein the second data is data belonging to the second part, and the first data and the second data are data obtained by the first node at different moments.

10. The method according to any one of claims 1 to 9, wherein the first node is a tail node in the first network.

11. The method according to any one of claims 1 to 10, wherein the second network is a chain network.

12. The method according to claim 11, wherein the second node is a tail node in the second network.

13. A communication method, wherein the method comprises:
performing, by a second node, a communication connection to a first node in a first network, wherein the second node is a node in a second network, a fault occurs in the first network, the first network is divided into a first part and a second part because of the fault, the first part comprises a head node in the first network, communication between the first part and the second part is interrupted, and the second part comprises the first node;
receiving, by the second node, first data sent by the first node, wherein the first data is data belonging to the second part; and
sending, by the second node, the first data.

14. The method according to claim 13, wherein a position relationship between the first node and the second node meets a specified condition.

15. The method according to claim 14, wherein the specified condition comprises one or more of the following: a distance between the first node and the second node is less than a distance threshold, or an altitude difference between the first node and the second node is less than a difference threshold.

16. The method according to any one of claims 13 to 15, wherein the method further comprises:
receiving, by the second node, recovery information, wherein the recovery information indicates that the communication between the first part and the second part is recovered; and
sending, by the second node, the recovery information to the first node, wherein the recovery information further indicates that the first node sends second data to the head node, the second data is data belonging to the second part, and the first data and the second data are data obtained by the first node at different moments.

17. The method according to any one of claims 13 to 16, wherein the first node is a tail node in the first network.

18. The method according to any one of claims 13 to 17, wherein the second network is a chain network.

19. The method according to claim 18, wherein the second node is a tail node in the second network.

20. A communication apparatus, wherein the apparatus comprises:
a processing unit, configured to perform a communication connection to a second node in a second network when a fault occurs in a first network, wherein the first network is a chain network, the first network is divided into a first part and a second part because of the fault, the first part comprises a head node in the first network, communication between the first part and the second part is interrupted, and the second part comprises the apparatus; and
a communication unit, configured to send first data to the second node, wherein the first data is data belonging to the second part.

21. The apparatus according to claim 20, wherein a position relationship between the apparatus and the second node meets a specified condition.

22. The apparatus according to claim 21, wherein the specified condition comprises one or more of the following: a distance between the apparatus and the second node is less than a distance threshold, or an altitude difference between the apparatus and the second node is less than a difference threshold.

23. The apparatus according to any one of claims 20 to 22, wherein the processing unit is configured to:
obtain network information of a wireless local area network of the second node; and
perform a communication connection to the second node based on the network information.

24. The apparatus according to any one of claims 20 to 23, wherein the first data is data collected by the apparatus for an environment in which the apparatus is located.

25. The apparatus according to any one of claims 20 to 23, wherein the communication unit is further configured to receive the first data, wherein the first data is data collected by a node in the second part other than the apparatus for an environment in which the node is located.

26. The apparatus according to any one of claims 20 to 25, wherein the second part further comprises a third node, and the fault is a communication fault between the third node and an upstream neighboring node of the third node; and
the communication unit is further configured to receive a fault identifier, wherein the fault identifier is sent by the third node when detecting that the fault occurs in the first network; and
the processing unit is further configured to determine, based on the fault identifier, that the fault occurs in the first network.

27. The apparatus according to any one of claims 20 to 25, wherein the fault is a communication fault between the apparatus and an upstream neighboring node of the apparatus.

28. The apparatus according to any one of claims 20 to 27, wherein the communication unit is further configured to:
receive recovery information sent by the second node, wherein the recovery information indicates that the communication between the first part and the second part is recovered; and
send second data to the head node based on the recovery information, wherein the second data is data belonging to the second part, and the first data and the second data are data obtained by the apparatus at different moments.

29. The apparatus according to any one of claims 20 to 28, wherein the apparatus is a tail node in the first network.

30. The apparatus according to any one of claims 20 to 29, wherein the second network is a chain network.

31. The apparatus according to claim 30, wherein the second node is a tail node in the second network.

32. A communication apparatus, wherein the apparatus comprises:
a processing unit, configured to perform a communication connection to a first node in a first network, wherein the apparatus is a node in a second network, a fault occurs in the first network, the first network is divided into a first part and a second part because of the fault, the first part comprises a head node in the first network, communication between the first part and the second part is interrupted, and the second part comprises the first node; and
a communication unit, configured to: receive first data sent by the first node, wherein the first data is data belonging to the second part; and send the first data.

33. The apparatus according to claim 32, wherein a position relationship between the first node and the apparatus meets a specified condition.

34. The apparatus according to claim 33, wherein the specified condition comprises one or more of the following: a distance between the first node and the apparatus is less than a distance threshold, or an altitude difference between the first node and the apparatus is less than a difference threshold.

35. The apparatus according to any one of claims 32 to 34, wherein the communication unit is further configured to:
receive recovery information, wherein the recovery information indicates that the communication between the first part and the second part is recovered; and
send the recovery information to the first node, wherein the recovery information further indicates that the first node sends second data to the head node, the second data is data belonging to the second part, and the first data and the second data are data obtained by the first node at different moments.

36. The apparatus according to any one of claims 32 to 35, wherein the first node is a tail node in the first network.

37. The apparatus according to any one of claims 32 to 36, wherein the second network is a chain network.

38. The apparatus according to claim 37, wherein the apparatus is a tail node in the second network.

39. A first node, wherein the first node comprises a memory, a processor, and a computer program stored in the memory; and when the processor executes the computer program, the first node is enabled to implement the method according to any one of claims 1 to 12.

40. A second node, wherein the second node comprises a memory, a processor, and a computer program stored in the memory; and when the processor executes the computer program, the second node is enabled to implement the method according to any one of claims 13 to 19.

41. A communication system, wherein the communication system comprises the apparatus according to any one of claims 20 to 31 and the apparatus according to any one of claims 32 to 38, or the communication system comprises the first node according to claim 39 and the second node according to claim 40.

42. A computer-readable storage medium, having a computer program or instructions stored therein, wherein when the computer program or the instructions are executed by a processor, the method according to any one of claims 1 to 19 is implemented.

43. A computer program product, having a computer program stored therein, wherein when the computer program is executed by a processor, the method according to any one of claims 1 to 19 is implemented.
